# EUROPÄISCHE PATENTSCHRIFT

(11) **EP 3 299 562 B1**
(45) Veröffentlichungstag und Bekanntmachung des Hinweises auf die Patenterteilung: **22.03.2023**
(21) Anmeldenummer: 17192076.2
(22) Anmeldetag: 20.09.2017
(51) Int. Cl.: E05F 15/622, F16H 25/20, E05F 1/10

(54) **SPINDELANTRIEBSEINRICHTUNG**
SPINDLE DRIVE APPARATUS
DISPOSITIF D'ENTRAÎNEMENT DE BROCHE

(30) Priorität: 22.09.2016 DE 102016218225
(43) Veröffentlichungstag der Anmeldung: 28.03.2018
(73) Patentinhaber: Stabilus GmbH, 56070 Koblenz (DE)
(72) Erfinder: Oster, Peter, 56068 Koblenz (DE)
(74) Vertreter: Weickmann & Weickmann PartmbB

(56) Entgegenhaltungen:
- WO-A1-2012/063226
- WO-A1-2015/061885
- DE-A1-102004 040 170
- DE-A1-102007 037 128
- DE-A1-102013 003 830
- US-A1- 2004 084 265
- US-A1- 2009 113 803

## Beschreibung

Die Erfindung betrifft eine Spindelantriebseinrichtung, wie sie beispielsweise zum Öffnen und Schließen von Türen und/oder Heckklappen von Kraftfahrzeugen eingesetzt wird. Die im Markt allgemein bekannten Spindelantriebseinrichtungen haben den Nachteil, dass sie aufgrund der hohen Anzahl an Komponenten, aus denen sie zusammengesetzt sind, hohe Herstellungskosten aufweisen. Zudem stellen sie aufgrund ihrer Bauweise hohe Ansprüche an den zu ihrem Einsatz zur Verfügung zu stellenden Bauraum.

Eine gattungsgemäße Spindelantriebsgruppe ist beispielsweise aus der US 2004/084265 A1 bekannt, wobei diese allerdings hinsichtlich ihrer Montierbarkeit relativ unflexibel ist. Es ist daher Aufgabe der vorliegenden Erfindung, hier Abhilfe zu schaffen.

Diese Aufgabe wird erfindungsgemäß gelöst durch eine Spindelantriebseinrichtung gemäß Anspruch 1.

Aufgrund dieser Bauweise braucht die erfindungsgemäße Spindelantriebseinrichtung kein Gehäuserohr aufzuweisen. Zudem braucht die Antriebseinheit, die beispielsweise von einem Elektromotor gebildet sein kann, nicht in Verlängerung des Führungsrohrs auf der Längsachse angeordnet zu sein, sondern kann immer dort angeordnet werden, wo Bauraum für sie zur Verfügung steht. Insbesondere kann das Antriebselement an jeder beliebigen geeigneten Position längs des Führungsrohrs mit diesem drehfest verbunden werden.

Die drehfeste Verbindung von Antriebselement und Führungsrohr kann beispielsweise durch Presssitz erzielt werden. Zusätzlich oder alternativ kann das Führungsrohr an seiner Außenseite wenigstens eine in Achsrichtung verlaufende Nut aufweisen.

Um das Drehmoment, das die Tür oder/und Heckklappe des Kraftfahrzeugs auf die Spindelantriebseinrichtung ausübt, zumindest teilweise kompensieren zu können, wird vorgeschlagen, dass die Spindelantriebseinrichtung ferner eine vorgespannte Schraubenfeder umfasst, welche das Führungsrohr und die Spindel zumindest auf einem Teil von deren jeweiliger Länge umgibt. Dabei kann die Schraubenfeder mit dem Führungsrohr mittels einer ersten Halterung sowohl in axialer Richtung als auch in Umfangsrichtung betriebsfest verbunden sein, während sie mit der Spindel mittels einer zweiten Halterung in axialer Richtung betriebsfest, in Umfangsrichtung jedoch relativ zu dieser verdrehbar verbindbar sein kann. Beispielsweise können beide Halterungen mit der Schraubenfeder in Gewindeeingriff stehen. Dabei kann der Drehsinn der Schraubenfeder derart gewählt sein, dass der Gewindeeingriff auch bei der gemeinsamen Drehung von Führungsrohr und Schraubenfeder nicht aufgehoben wird. Beispielsweise kann die Schraubenfeder als Schraubenzugfeder ausgebildet sein.

Die das Führungsrohr umgebende Schraubenfeder kann zudem zum Schutz der Spindel, insbesondere zum Schutz des Gewindes der Spindel, vor äußeren Einflüssen und unbeabsichtigter Beschädigung beitragen, da sie die Spindel zusammen mit dem Führungsrohr auf deren gesamter Länge umgibt.

In diesem Zusammenhang kann beispielsweise auch die erste Halterung in die vorstehend erwähnte Nut eingreifen, um ihre drehfeste Verbindung mit dem Führungsrohr sicherstellen zu können. Eine Verlagerung der Halterung in der Nut kann aber auch dazu genutzt werden, die Vorspannung der Schraubenfeder zu verändern. Mittels einer Madenschraube oder anderen geeigneten Mitteln kann die Halterung dann relativ zum Führungsrohr in axialer Richtung festgelegt werden.

Die Antriebseinheit kann beispielsweise derart angeordnet werden, dass eine Abtriebswelle der Antriebseinheit zur Spindel im Wesentlichen parallel verläuft. Durch diese Anordnung kann die Gesamtlänge der erfindungsgemäßen Spindelantriebseinrichtung im Vergleich zu herkömmlichen Spindelantriebseinrichtungen, bei denen die Antriebseinheit in Verlängerung des Führungsrohrs auf dessen Längsachse angeordnet ist, verringert werden. Die Abtriebswelle der Antriebseinheit kann mit dem das Führungsrohr umgebenden Antriebselement beispielsweise mittels eines Ritzels, das mit einer Außenverzahnung des Antriebselements kämmt oder mittels eines Riemens, beispielsweise eines Zahnriemens, verbunden sein.

Um sich auch auf Situationen mit anderen Bauraumgegebenheiten einstellen zu können, ist es jedoch auch denkbar, dass eine Abtriebswelle der Antriebseinheit zur Spindel im Wesentlichen orthogonal verläuft. Bauraumgegebenheiten, bei denen diese Ausführungsvariante mit Vorteil eingesetzt werden kann, findet man beispielsweise bei Heckklappen von Kraftfahrzeugen. Dort kann die Antriebseinheit vorteilhafterweise im Wesentlichen parallel zur Schwenkachse der Heckklappe angeordnet werden.

Zur Verbindung der Abtriebswelle der Antriebseinheit mit dem Antriebselement kann in diesem Fall vorgesehen sein, dass die Abtriebswelle der Antriebseinheit ein Schneckenrad trägt, welches mit einer Außenverzahnung des mit dem Führungsrohr verbundenen Antriebselements kämmt. Die hierdurch gebildete Schneckenradstufe zur Untersetzung der Drehzahl der Abtriebswelle der Antriebseinheit zeichnet sich durch geringe Geräuschentwicklung aus.

Um die Spindelantriebseinrichtung je nach Anwendungsfall wahlweise an der rechten Seite oder der linken Seite der Heckklappe anordnen zu können, ohne hierfür zwei gesonderte Typen von Spindelantriebseinrichtung bereitstellen zu müssen, nämlich eine "linke" und eine "rechte" Spindelantriebseinrichtung, kann vorteilhafterweise vorgesehen sein, dass die Antriebsbaugruppe mit dem Führungsrohr in zwei bezüglich einer zur Längsachse orthogonal verlaufenden Achse um 180° gedrehten Stellungen verbindbar ist. Auf diese Weise braucht die Antriebsbaugruppe lediglich in der entsprechenden Orientierung mit dem Führungsrohr verbunden zu werden, um eine "linke" oder eine "rechte" Spindelantriebseinrichtung zu erhalten. Diese Ausführungsvariante kann aber auch bei Ausführungsformen mit parallel zur Längsachse des Führungsrohrs orientierter Abtriebswelle der Antriebseinheit mit Vorteil eingesetzt werden.

In Weiterbildung der Erfindung wird vorgeschlagen, dass die Antriebsbaugruppe ein Gehäuse umfasst, in welchem die Antriebseinheit und das Antriebselement aufgenommen sind. Über dieses Gehäuse kann die Antriebsbaugruppe ferner an der einen übergeordneten Baugruppe oder dem mit dieser verbundenen Element abgestützt sein. Das Gehäuse kann vorteilhafterweise zwei Gehäuseteile umfassen, welche vorzugsweise nicht symmetrisch zueinander ausgebildet sind. Auf diese Weise umfasst das Gehäuse ein Gehäusehauptteil, in dem die Mehrzahl der Komponenten der Antriebsbaugruppe, vorzugsweise alle Komponenten der Antriebsbaugruppe, angeordnet sind, und ein Gehäusedeckelteil, dessen Funktion im Wesentlichen darin besteht, eine Montageöffnung des Gehäusehauptteils, welche einen Montagezugang zum Innenraum des Gehäuses gewährt, abzudecken.

Unabhängig davon, ob die Abtriebswelle der Antriebseinheit im Wesentlichen parallel oder im Wesentlichen orthogonal zur Längsachse des Führungsrohrs angeordnet ist, kann die Antriebseinheit bezogen auf das Führungsrohr in jeder beliebigen Umfangsposition angeordnet werden.

Um die Führung der Spindel in dem Führungsrohr verbessern zu können, wird in Weiterbildung der Erfindung ferner vorgeschlagen, dass an dem in dem Führungsrohr aufgenommenen Ende der Spindel eine Führungseinheit angeordnet ist, welche mit der Innenwand des Führungsrohr in Gleiteingriff steht.

Als weitere Ausführungsvariante, welche die Montage der Komponenten der erfindungsgemäßen Antriebseinrichtung erleichtert, kann das Führungsrohr aus zwei Halbschalen zusammengesetzt sein.

Nachzutragen ist noch, dass die Spindel vorzugsweise aus Stahl gefertigt sein kann, während das Führungsrohr beispielsweise aus Metall, aber auch aus Kunststoff gefertigt sein kann. Auch die Spindelmutter, die Führungseinheit und die beiden Halterungen für die Schraubenfeder können aus Kunststoff gefertigt sein. Darüber hinaus kann das Antriebselement aus Kunststoff gefertigt sein, während das Schneckenrad aus Kunststoff oder Metall gefertigt sein kann. Auch das die Antriebseinheit und das Antriebselement aufnehmende Gehäuse kann aus Kunststoff gefertigt sein. Schließlich können die Verbindungseinheiten und die Drehmomentabstützung aus Kunststoff oder/und Metall hergestellt sein.

Die Erfindung wird im Folgenden anhand der beigefügten Zeichnung an einem Ausführungsbeipiel näher erläutert. Es stellt dar:
- Figur 1: eine Seitenansicht einer Ausführungsform einer erfindungsgemäßen Spindelantriebseinrichtung;
- Figur 2: eine Seitenquerschnittsansicht der Spindelantriebseinrichtung aus Figur 1 gemäß der in Figur 1 angezeigten Schnittebene II-II;
- Figur 3: eine vergrößerte Ansicht des Details III aus Figur 2;
- Figur 4: eine vergrößerte Ansicht des Details IV aus Figur 2;
- Figur 5: eine um 90° gegen den Uhrzeigersinn gedrehte Querschnittsansicht gemäß der in Figur 1 dargestellten Schnittebene V-V.

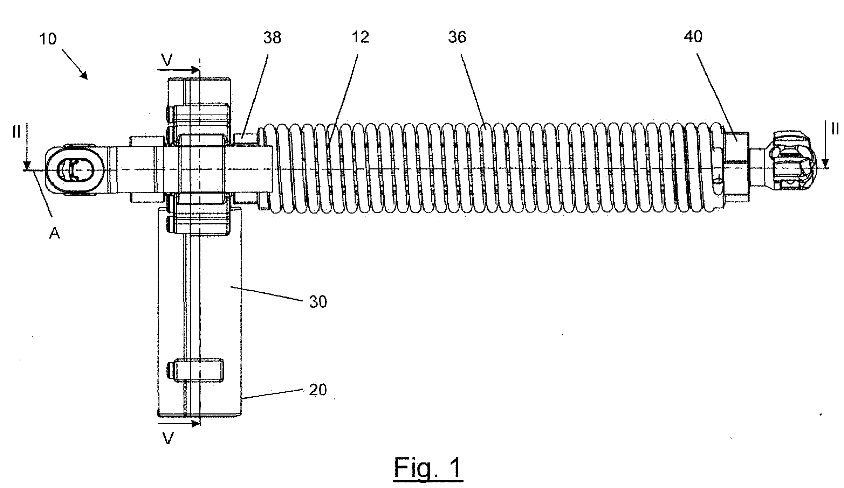

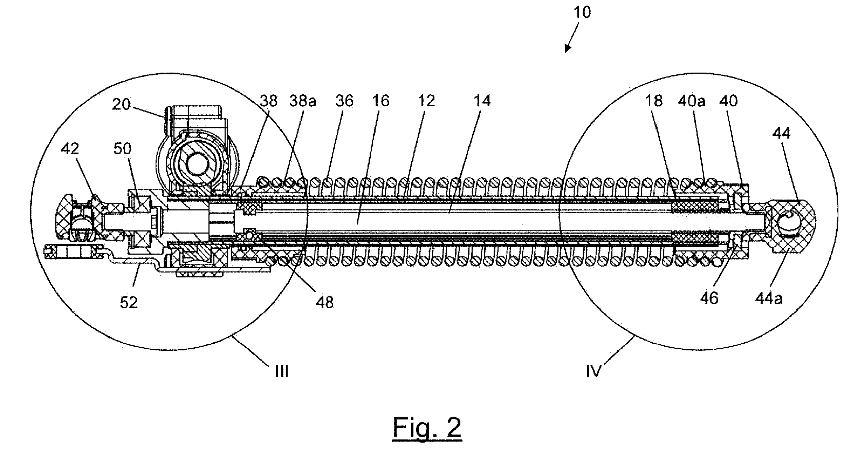

In den Figuren 1 und 2 ist eine Ausführungsform einer erfindungsgemäßen Spindelantriebseinrichtung allgemein mit dem Bezugszeichen 10 bezeichnet.

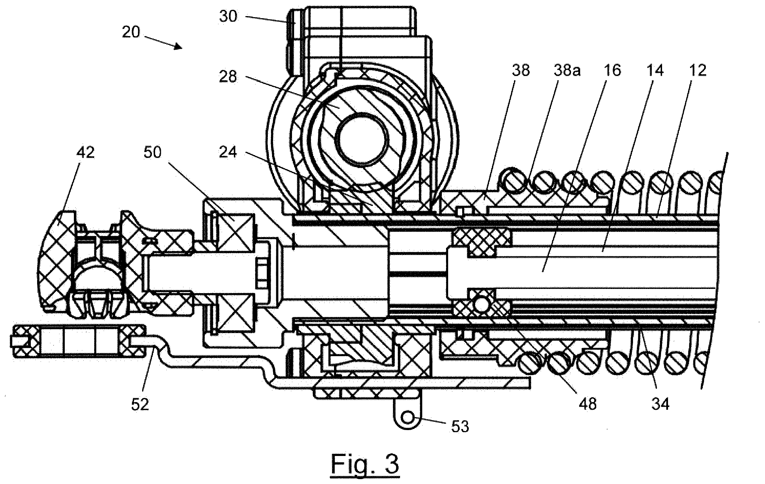

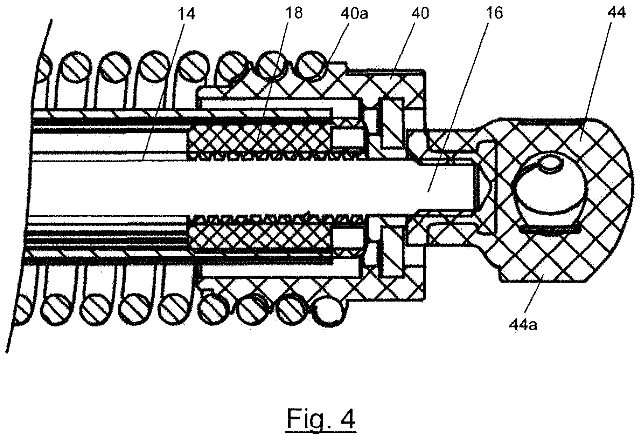

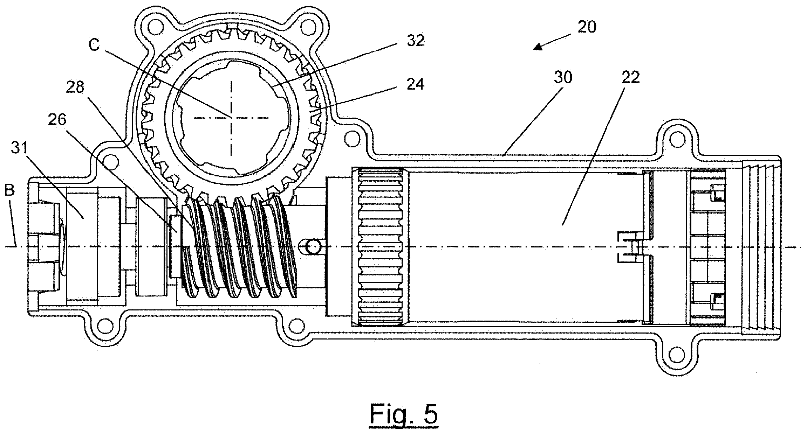

Die Spindelantriebseinrichtung 10 umfasst ein Führungsrohr 12 mit einer Längsachse A, welche in diesem Ausführungsbeispiel mit einer Mittelachse des Führungsrohrs 12 zusammenfällt. In dem Führungsrohr 12 ist eine mit einem Außengewinde 14 versehene Spindel 16 (s. auch Figuren 3 und 4) zumindest teilweise aufgenommen, die an einer Seite des Führungsrohrs 12 aus diesem herausragt. Ferner umfasst die Spindelantriebseinrichtung 10 eine an dem Führungsrohr 12 befestigte und mit dem Außengewinde 14 der Spindel 16 in Gewindeeingriff stehende Spindelmutter 18 und eine Antriebsbaugruppe 20 mit einer Antriebseinheit 22, welche hier als ein Elektromotor 22 ausgebildet ist (s. Figur 5).

Mit weiterem Bezug auf Figur 5 umgibt ein von dem Elektromotor 22 angetriebenes Antriebselement 24 das Führungsrohr 12 und ist mit diesem drehfest verbindbar, wobei das Antriebselement 24 und somit die Antriebsbaugruppe 20 entlang des Führungsrohrs 12 verlagerbar sind.

Der Elektromotor 22 umfasst eine Abtriebswelle 26, auf welcher wiederum ein Schneckenrad 28 angeordnet ist. Die Abtriebswelle 26 ist dabei auf ihrer dem Elektromotor 22 entgegengesetzten Seite in einem Gehäuse 30 der Antriebsbaugruppe 20 drehbar gelagert. Das Schneckenrad 28 steht mit dem Antriebselement 24 derart in Gewindeeingriff, dass eine Rotation des Schneckenrads 28 um eine Rotationsachse B eine Rotation des Antriebselements 24 um eine Rotationsachse C hervorruft. Die Rotationsachse B und die Rotationsachse C sind dabei im Wesentlichen orthogonal und windschief zueinander angeordnet.

In Figur 5 erkennt man links noch eine Bremse 31, die sicherstellt, dass die Tür bzw. Heckklappe des Kraftfahrzeugs nach dem Ausschalten des Elektromotors 22 in der Stellung, in der sie sich beim Abschalten des Elektromotors 22 befand, verharrt. Die Bremse 31 verhindert also, dass die Tür bzw. Heccklappe des Kraftfahrzeugs in unerwünschter Weise selbsttätig wieder zufällt.

Das Gehäuse 30 der Antriebsbaugruppe 20 weist eine Haupterstreckungsrichtung auf, welche im Wesentlichen rechtwinklig zu der Längsachse A angeordnet ist und sich entlang der Rotationsachse B erstreckt.

Wie oben erwähnt und in den Figuren 3 und 5 zu erkennen, ist das Antriebselement 24 verdrehsicher auf dem Führungsrohr 12 angeordnet. Dabei greift das Antriebselement 24 mit nach innen weisenden Vorsprüngen 32 in entsprechende Längsnuten 34 ein, welche sich auf der Außenseite des Führungsrohrs 12 und parallel zu der Längsachse A erstrecken.

Das Führungsrohr 12 ist von einer Schraubenfeder 36 umgeben, wobei das in Figur 1 dargestellte linke Ende der Schraubenfeder 36 in einer ersten Halterung 38 und das in Figur 1 dargestellte rechte Ende der Schraubenfeder 36 in einer zweiten Halterung 40 aufgenommen ist.

Mit Bezug auf Figuren 2 bis 4 ist zu erkennen, dass die Schraubenfeder 36 mit der ersten Halterung 38 sowie mit der zweiten Halterung 40 in Gewindeeingriff 38a, 40a steht. Die erste Halterung 38 ist in dem hier dargestellten Ausführungsbeispiel der Spindelantriebseinrichtung 10 mit dem Führungsrohr 12 translatorisch und rotatorisch fest verbunden.

An ihren beiden Enden entlang der Längsachse A weist die Spindelantriebseinrichtung 10 eine Verbindungseinheit 42 bzw. 44 zur Verbindung der Spindelantriebseinrichtung 10 mit einer übergeordneten, d.h. nicht zur Spindelantriebseinrichtung 10 gehörenden, Baugruppe, wie beispielsweise einer Heckklappe oder einer Karosserie eines Fahrzeugs, auf.

Die Verbindungseinheit 44 ist an dem aus dem Führungsrohr 12 herausragenden Ende der Spindel 16 verdrehfest angeordnet, wobei die Verbindungseinheit 44 hier auf das Ende der Spindel 16 aufgeschraubt ist. Die Drehmomentabstützung erfolgt dabei über zwei Ansätze 44a (siehe insbesondere Figur 4) der Verbindungseinheit 44 am (nicht dargestellten) zugeordneten Kugelzapfen der übergeordneten Baueinheit. Der Verbindungseinheit 44 benachbart ist die zweite Halterung 40 drehbar auf der Spindel 16 gelagert (s. Bezugszeichen 46).

An dem der Verbindungseinheit 44 entgegengesetzten Ende der Spindel 16 ist eine Führungseinheit 48 fest angeordnet, welche mit der Innenwand des Führungsrohrs 12 in Gleiteingriff steht und somit ein Verkippen der Spindel 16 relativ zu dem Führungsrohr 12 reduziert oder sogar gänzlich verhindert. Die Führungseinheit 48 kann alternativ auch mit der Innenwand des Führungsrohrs 12 drehfest, aber axial verlagerbar, verbunden sein, z.B. über einen Eingriff entsprechender Längsnuten an der Innenwand des Führungsrohrs 12 und Vorsprünge an der Führungseinheit 48, und mit der Spindel 16 in rotatorisch freiem, aber axial festem, Eingriff, beispielsweise als Gleiteingriff oder Rolleingriff, stehen.

An dem der Verbindungseinheit 44 entgegengesetzten Ende des Führungsrohrs 12 ist die Verbindungseinheit 42 über eine eine Rotation erlaubende Lagerung 50 mit dem Führungsrohr 12 verbunden.

Aufgrund der festen Verbindung der ersten Halterung 38 mit dem Führungsrohr 12 und der relativ zu der Verbindungseinheit 44 drehbaren Lagerung der zweiten Halterung 40 wird bei einer Aktivierung des Elektromotors 22 über das Antriebselement 24 sowohl das Führungsrohr 12 und somit die Spindelmutter 18 als auch über die erste Halterung 38 die Schraubenfeder 36 in Rotation versetzt, so dass, vermittels des Gewindeeingriffs der Spindelmutter 18 mit der Spindel 16, die Spindel 16 und damit die Verbindungseinheit 44 relativ zu der Verbindungseinheit 42 entlang der Längsachse A verlagert werden, ohne dass dabei die Spindel 16 und die Verbindungseinheit 44 rotieren.

Alternativ ist es denkbar, dass die erste Halterung 38 relativ zu dem Führungsrohr 12 drehbar gelagert ist und die zweite Halterung 40 fest mit der Verbindungseinheit 44 oder/und der Spindel 16 verbunden ist, so dass bei einer Rotation des Führungsrohrs 12 die Schraubenfeder 36 relativ zu der Spindel 16 nicht rotiert.

Unabhängig davon, ob die Schraubenfeder 36 relativ zu der Spindel 16 rotierbar gelagert ist oder nicht, kann die Schraubenfeder 36 zugleich die Funktion eines äußeren Schutzrohrs aufweisen, welches die innerhalb der Schraubenfeder 36 angeordneten Komponenten, wie beispielsweise das Führungsrohr 12, vor mechanischen Beeinträchtigungen schützen kann. Die Spindelantriebseinrichtung 10 kann an der Außenseite der Schraubenfeder 36 aber auch eine Schutzhülle aufweisen.

Um eine Drehmomentabstützung des Gehäuses 30 der Antriebsbaugruppe 20 und damit des Elektromotors 22 relativ zu dem Führungsrohr 12 zu erreichen, d.h. eine ungewollte Rotation der Antriebsbaugruppe 20 relativ zu z.B. der Verbindungseinheit 42 zu verhindern, ist an der Antriebsbaugruppe 20 ein Befestigungselement 52 angeordnet. Das Befestigungselement 52 greift in der hier dargestellten Ausführungsform (siehe insbesondere Figuren 2 und 3) mit einer nicht dargestellten Montagestruktur der übergeordneten Baugruppe ein, welche ebenfalls mit der Verbindungseinheit 42, z.B. unter Ausbildung eines Kugelgelenks, in Eingriff steht. Natürlich könnte das Befestigungselement 52 auch direkt mit der Verbindungseinheit 42 verbunden sein.

Zusätzlich oder alternativ zum Befestigungselement 52 könnte an dem Gehäuse 30 eine weitere Befestigungsstelle 53 (siehe Figur 3) vorgesehen sein, welche zur Drehmomentabstützung des Gehäuses 30 zumindest beitragen kann.

Wie voranstehend beschrieben und aus dem Eingriff des Antriebselements 24 mit dem Führungsrohr 12 gemäß Figuren 2, 3 und 5 ersichtlich, ist es möglich die Antriebsbaugruppe 20 auf dem Führungsrohr 12 parallel zu der Längsachse A zu verlagern, so dass zum einen die Position der Antriebsbaugruppe 20 relativ zu den beiden Verbindungseinheiten 42 und 44 variabel einstellbar ist und zum anderen gegebenenfalls eine Vorspannung der Schraubenfeder 36 verändert werden kann. Die Antriebsbaugruppe 20 kann an der gewünschten Position relativ zu dem Führungsrohr 12 beispielsweise unter Verwendung einer, nicht dargestellten, Madenschraube befestigt werden, welche z.B. das Gehäuse 30 der Antriebsbaugruppe 20 mit dem Befestigungselement 52 verbindet.

Somit kann auch das Befestigungselement 52 relativ zu der Antriebsbaugruppe 20 und parallel zu der Längsachse A verlagerbar sein oder das Befestigungselement 52 kann austauschbar sein, so dass für jede beliebige Position der Antriebsbaugruppe 20 das Befestigungselement 52 derart eingerichtet sein kann, dass eine entsprechende Drehmomentabstützung gewährleistet ist.

Alternativ oder zusätzlich kann die Schraubenfeder 36 auch durch eine Schraubenfeder mit einer von der Schraubenfeder 36 abweichenden Länge oder/und Federkraft ausgetauscht werden.

## Patentansprüche

1. Spindelantriebseinrichtung (10), umfassend
• ein Führungsrohr (12) mit einer Längsachse (A),
wobei das Führungsrohr (12) an seinem einen Ende mit einer Verbindungseinheit (42) zur Verbindung der Spindelantriebseinrichtung (10) mit einer übergeordneten, d.h. nicht zur Spindelantriebseinrichtung (10) gehörenden, Baugruppe versehen ist, und
wobei die Verbindungseinheit (42) an dem Führungsrohr (12) relativ zu diesem um die Längsachse (A) verdrehbar befestigt ist,
• eine mit einem Außengewinde (14) versehene Spindel (16), die zumindest teilweise in dem Führungsrohr (12) aufgenommen ist und an dem jeweils anderen Ende des Führungsrohrs (12) aus diesem herausragt,
wobei an dem aus dem Führungsrohr (12) herausragenden Ende der Spindel (16) eine weitere Verbindungseinheit (44) zur Verbindung der Spindelantriebseinrichtung (10) mit einer weiteren übergeordneten, d.h. nicht zur Spindelantriebseinrichtung (10) gehörenden, Baugruppe drehfest verbunden ist,
• eine an dem Führungsrohr (12) befestigte und mit dem Außengewinde (14) der Spindel (16) in Gewindeeingriff stehende Spindelmutter (18), und
• eine Antriebsbaugruppe (20) mit einer Antriebseinheit (22),
wobei ein von der Antriebseinheit (22) angetriebenes Antriebselement (24) das Führungsrohr (12) umgibt und mit diesem drehfest verbindbar ist,
wobei die Antriebseinheit (22) an einem mit der übergeordneten Baugruppe verbundenen Befestigungselement (52) abgestützt ist, wobei das Befestigungselement (52) der Antriebsbaugruppe (20) zugeordnet ist,
• eine vorgespannte Schraubenfeder (36), welche das Führungsrohr (12) und die Spindel (16) zumindest auf einem Teil von deren jeweiliger Länge umgibt,
**dadurch gekennzeichnet, dass** das Antriebselement (24) und somit die Antriebsbaugruppe (20) dazu eingerichtet sind, auf dem Führungsrohr (12) parallel zu der Längsachse (A) derart verlagerbar zu sein, dass zum einen die Position der Antriebsbaugruppe (20) relativ zu den beiden Verbindungseinheiten (42, 44) variabel einstellbar ist und zum anderen ggf. eine Vorspannung der Schraubenfeder (36) verändert werden kann.

2. Spindelantriebseinrichtung (10) nach Anspruch 1,
**dadurch gekennzeichnet, dass** das Antriebselement (24) und das Führungsrohr (12) miteinander durch Presssitz drehfest verbunden sind.

3. Spindelantriebseinrichtung (10) nach Anspruch 1 oder 2,
**dadurch gekennzeichnet, dass** das Führungsrohr (12) an seiner Außenseite wenigstens eine in Achsrichtung (A) verlaufende Nut (34) aufweist.

4. Spindelantriebseinrichtung (10) nach einem der Ansprüche 1 bis 3,
**dadurch gekennzeichnet, dass** eine Abtriebswelle (26) der Antriebseinheit (22) zur Spindel (16) im Wesentlichen orthogonal verläuft.

5. Spindelantriebseinrichtung (10) nach Anspruch 4,
**dadurch gekennzeichnet, dass** die Abtriebswelle (26) der Antriebseinheit (22) ein Schneckenrad (28) trägt, welches mit einer Außenverzahnung des mit dem Führungsrohr (12) verbundenen Antriebselements (24) kämmt.

6. Spindelantriebseinrichtung (10) nach einem der Ansprüche 1 bis 5,
**dadurch gekennzeichnet, dass** die Antriebsbaugruppe (20) mit dem Führungsrohr (12) in zwei bezüglich einer zur Längsachse orthogonal verlaufenden Achse um 180° gedrehten Stellungen verbindbar ist.

7. Spindelantriebseinrichtung (10) nach einem der Ansprüche 1 bis 6,
**dadurch gekennzeichnet, dass** die Antriebsbaugruppe (20) ein Gehäuse (30) umfasst, in welchem die Antriebseinheit (22) und das Antriebselement (24) aufgenommen sind.

8. Spindelantriebseinrichtung (10) nach Anspruch 7,
**dadurch gekennzeichnet, dass** das Gehäuse (30) zwei Gehäuseteile umfasst,
welche vorzugsweise unsymmetrisch zueinander ausgebildet sind.

9. Spindelantriebseinrichtung (10) nach einem der Ansprüche 1 bis 8,
**dadurch gekennzeichnet, dass** an dem in dem Führungsrohr (12) aufgenommenen Ende der Spindel (16) eine Führungseinheit (48) angeordnet ist, welche mit der Innenwand des Führungsrohrs (12) in Gleiteingriff steht.

10. Spindelantriebseinrichtung (10) nach einem der Ansprüche 1 bis 9,
**dadurch gekennzeichnet, dass** das Führungsrohr (12) aus zwei Halbschalen zusammengesetzt ist.

## Claims

1. Spindle drive apparatus (10) comprising
• a guide tube (12) having a longitudinal axis (A),
wherein the guide tube (12) is provided, on one end thereof, with a connection unit (42) for connecting the spindle drive apparatus (10) to a superordinate assembly, i.e. an assembly that is not part of the spindle drive apparatus (10), and wherein the connection unit (42) is fastened to the guide tube (12) such that it can rotate relative thereto about the longitudinal axis (A),
• a spindle (16) which is provided with an external thread (14), is housed at least in part in the guide tube (12), and protrudes out of the guide tube (12) at the other end thereof in each case,
wherein a further connection unit (44) is rotationally fixed to the end of the spindle (16) that protrudes out of the guide tube (12), which further connection unit is intended for connecting the spindle drive apparatus (10) to a further superordinate assembly, i.e. an assembly that is not part of the spindle drive apparatus (10),
• a spindle nut (18) that is fastened to the guide tube (12) and is in threaded engagement with the external thread (14) of the spindle (16), and
• a drive assembly (20) comprising a drive unit (22),
wherein a drive element (24) that is driven by the drive unit (22) surrounds the guide tube (12) and can be rotationally fixed thereto, and
wherein the drive unit (22) is supported on a fastening element (52) connected to the superordinate assembly, wherein the fastening element (52) is arranged on the drive assembly (20),
• a helical spring (36) which surrounds the guide tube (12) and the spindle (16) over at least a portion of the length thereof in each case,
**characterised in that** the drive element (24) and thus the drive assembly (20) are arranged to be movable on the guide tube (12) parallel to the longitudinal axis (A) in such a manner that the position of the drive assembly (20) relative to the two connection units (42, 44) can be variably adjusted and the preloading of the helical spring (36) can optionally be modified.

2. Spindle drive apparatus (10) according to claim 1, **characterised in that** the drive element (24) and the guide tube (12) are rotationally fixed to one another by means of an interference fit.

3. Spindle drive apparatus (10) according to either claim 1 or claim 2, **characterised in that** the guide tube (12) comprises, on the outside thereof, at least one groove (34) extending in the axial direction (A).

4. Spindle drive apparatus (10) according to any of claims 1 to 3, **characterised in that** an output shaft (26) of the drive unit (22) extends substantially orthogonally to the spindle (16).

5. Spindle drive apparatus (10) according to claim 5, **characterised in that** the output shaft (26) of the drive unit (22) supports a worm wheel (28) which meshes with external teeth on the drive element (24) connected to the guide tube (12).

6. Spindle drive apparatus (10) according to any of claims 1 to 5, **characterised in that** the drive assembly (20) can be connected to the guide tube (12) in two positions in which it is rotated by 180° relative to an axis that extends orthogonally to the longitudinal axis.

7. Spindle drive apparatus (10) according to any of claims 1 to 6, **characterised in that** the drive assembly (20) comprises a housing (30) in which the drive unit (22) and the drive element (24) are housed.

8. Spindle drive apparatus (10) according to claim 7, **characterised in that** the housing (30) comprises two housing parts which are preferably formed asymmetric to one another.

9. Spindle drive apparatus (10) according to any of claims 1 to 8, **characterised in that** a guide unit (48) is arranged on the end of the spindle (16) that is housed in the guide tube (12), which guide unit is slidably engaged with the interior wall of the guide tube (12).

10. Spindle drive apparatus (10) according to any of claims 1 to 9, **characterised in that** the guide tube (12) is composed of two half shells.

## Revendications

1. Dispositif d'entraînement de broche (10), comprenant
• un tube de guidage (12) avec un axe longitudinal (A),
dans lequel le tube de guidage (12) est pourvu à l'une de ses extrémités d'une unité de liaison (42) pour relier le dispositif d'entraînement de broche (10) à un ensemble de niveau supérieur, c'est-à-dire n'appartenant pas au dispositif d'entraînement de broche (10), et
dans lequel l'unité de liaison (42) est fixée au tube de guidage (12) de manière à pouvoir tourner par rapport à celui-ci autour de l'axe longitudinal (A),
• une broche (16) pourvue d'un filetage extérieur (14), qui est logée au moins partiellement dans le tube de guidage (12) et fait saillie hors de celui-ci à l'autre extrémité respective du tube de guidage (12),
dans lequel une autre unité de liaison (44) destinée à relier le dispositif d'entraînement de broche (10) à un autre ensemble de niveau supérieur, c'est-à-dire n'appartenant pas au dispositif d'entraînement de broche (10), est reliée solidaire en rotation à l'extrémité de la broche (16) qui dépasse du tube de guidage (12),
• un écrou de broche (18) fixé au tube de guidage (12) et en prise par filetage avec le filetage extérieur (14) de la broche (16), et
• un ensemble d'entraînement (20) avec une unité d'entraînement (22),
dans lequel un élément d'entraînement (24) entraîné par l'unité d'entraînement (22) entoure le tube de guidage (12) et peut être relié à celui-ci solidaire en rotation,
dans lequel l'unité d'entraînement (22) est supportée par un élément de fixation (52) relié à l'ensemble supérieur, l'élément de fixation (52) étant associé à l'ensemble d'entraînement (20),
• un ressort hélicoïdal précontraint (36) qui entoure le tube de guidage (12) et la broche (16) au moins sur une partie de leur longueur respective,
**caractérisé en ce que** l'élément d'entraînement (24) et donc l'ensemble d'entraînement (20) sont conçus pour être déplaçables sur le tube de guidage (12) parallèlement à l'axe longitudinal (A) de telle sorte que, d'une part, la position de l'ensemble d'entraînement (20) par rapport aux deux unités de liaison (42, 44) est réglable de manière variable et que, d'autre part, une précontrainte du ressort hélicoïdal (36) peut être modifiée le cas échéant.

2. Dispositif d'entraînement de broche (10) selon la revendication 1,
**caractérisé en ce que** l'élément d'entraînement (24) et le tube de guidage (12) sont reliés l'un à l'autre par ajustement serré solidaire en rotation.

3. Dispositif d'entraînement de broche (10) selon la revendication 1 ou 2,
**caractérisé en ce que** le tube de guidage (12) présente sur son côté extérieur au moins une rainure (34) s'étendant dans la direction axiale (A).

4. Dispositif d'entraînement de broche (10) selon l'une des revendications 1 à 3,
**caractérisé en ce qu'**un arbre de sortie (26) de l'unité d'entraînement (22) s'étend sensiblement orthogonalement à la broche (16).

5. Dispositif d'entraînement de broche (10) selon la revendication 4,
**caractérisé en ce que** l'arbre de sortie (26) de l'unité d'entraînement (22) porte une roue à vis sans fin (28) qui engrène avec une denture extérieure de l'élément d'entraînement (24) relié au tube de guidage (12).

6. Dispositif d'entraînement de broche (10) selon l'une des revendications 1 à 5, **caractérisé en ce que** l'ensemble d'entraînement (20) peut être relié au tube de guidage (12) dans deux positions tournées de 180° par rapport à un axe orthogonal à l'axe longitudinal.

7. Dispositif d'entraînement de broche (10) selon l'une des revendications 1 à 6, **caractérisé en ce que** l'ensemble d'entraînement (20) comprend un boîtier (30) dans lequel sont logés l'unité d'entraînement (22) et l'élément d'entraînement (24).

8. Dispositif d'entraînement de broche (10) selon la revendication 7,
**caractérisé en ce que** le boîtier (30) comprend deux parties de boîtier qui sont de préférence asymétriques l'une par rapport à l'autre.

9. Dispositif d'entraînement de broche (10) selon l'une des revendications 1 à 8, **caractérisé en ce qu'**à l'extrémité de la broche (16) reçue dans le tube de guidage (12) est disposée une unité de guidage (48) qui est en prise de glissement avec la paroi intérieure du tube de guidage (12).

10. Dispositif d'entraînement de broche (10) selon l'une des revendications 1 à 9, **caractérisé en ce que** le tube de guidage (12) est composé de deux demi-coques.
